(19)

**Europäisches Patentamt**
**European Patent Office**
**Office européen des brevets**

(11) **EP 3 885 996 A1**

(12) **EUROPEAN PATENT APPLICATION**

(43) Date of publication:
**29.09.2021 Bulletin 2021/39**

(51) Int Cl.:
***G06N 3/04*** *(2006.01)*     ***G06N 3/08*** *(2006.01)*

(21) Application number: **20166486.9**

(22) Date of filing: **27.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventors:
• **CIEPIELA, Filip**
  **30-148 Kraków (PL)**

• **KOMORKIEWICZ, Mateusz**
  **30-798 Kraków (PL)**
• **WÓJCIK, Mateusz**
  **30-408 Kraków (PL)**
• **DWORAK, Daniel**
  **33-100 Tarnów (PL)**

(74) Representative: **Manitz Finsterwald**
**Patent- und Rechtsanwaltspartnerschaft mbB**
**Martin-Greif-Strasse 1**
**80336 München (DE)**

(54) **METHOD AND SYSTEM FOR DETERMINING AN OUTPUT OF A CONVOLUTIONAL BLOCK OF AN ARTIFICIAL NEURAL NETWORK**

(57) A computer implemented method for determining an output of a convolutional block of an artificial neural network based on input data comprises the following steps carried out by computer hardware components: performing an iteration with a plurality of iterations; wherein in each iteration, a convolution operation is performed; wherein in a first iteration, an input to the convolution operation is based on the input data; wherein in subsequent iterations, an input to the convolution operation at a present iteration is based on an output of the convolution operation at a preceding iteration; and determining the output of the convolutional block based on output of the convolutional operation of at least one iteration of the plurality of iterations.

EP 3 885 996 A1

**Description**

FIELD

The present disclosure relates to methods for determining an output of a convolutional block of an artificial neural network.

BACKGROUND

Artificial neural networks are widely used for various applications. However, training and application of artificial neural networks may be a computationally expensive task.

Accordingly, there is a need to improve efficiency of artificial neural networks.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining an output of a convolutional block of an artificial neural network based on input data, the method comprising the following steps performed (in other words: carried out) by computer hardware components: performing an iteration with a plurality of iterations; wherein in each iteration, a convolution operation is performed; wherein in a first iteration, an input to the convolution operation is based on the input data; wherein in subsequent iterations, an input to the convolution operation at a present iteration is based on an output of the convolution operation at a preceding iteration; and determining the output of the convolutional block based on output of the convolutional operation of at least one iteration of the plurality of iterations.

The processing of the method may implement the convolutional block. In other words, the method provides the computation carried out by the block (or in other words: the method implements (or is) the block).

The preceding iteration may be an iteration directly preceding the present iteration (for example, when the present iteration is the i-th iteration, the preceding iteration may be the (i-1)-th operation).

The convolutional block according to various embodiments may be referred to as LmBlock (low memory-footprint convolutional block).

The low memory footprint convolutional block may be provided for general use in CNNs (convolutional neural networks), which reduces the number of weights and improves generalization. This block may replace any of the typical ResBlocks and enables fusion of low level sensor data automotive applications.

According to another aspect, the convolution operation is based on a plurality of weights, wherein the plurality of weights are identical for each iteration of the plurality of iterations.

It has been found that with using the same weights in each iteration, the total number of weights that must be trained and stored may be reduced, while at the same time, by iteratively (in other words: repeatedly) applying the convolution operation with the same weights, good computation results may be achieved.

According to another aspect, the convolution operation comprises a 3x3 convolution operation. Such a convolution operation may be efficiently implemented due to the reduced size (in particular, when the same weights are used for each iteration).

According to another aspect, the iteration comprises N iterations, wherein N is a pre-determined integer number. The number N may be selected based on the specific needs of the application of the artificial neural network, in which the convolutional block is applied, which may provide for a modular method which may (with different integer number N) be used for different applications.

According to another aspect, in a first iteration, the input to the convolution operation is based on preprocessing the input data. For example, the preprocessing may bring the input data in a format that is suitable as an input to the convolution operation (and which for example is identical to the format of an output of the convolution operation).

According to another aspect, the preprocessing comprises two further convolution operations (for example 1x1 convolutions, for example the first 1x1 convolution and the second 1x1 convolution (1x1 conv (1) and 1x1 conv (2) like will be described in more detail below).

According to another aspect, the preprocessing comprises concatenation of the respective outputs of the two further convolution operations.

According to another aspect, the output of the convolution block is determined based on postprocessing of output of the convolutional operation of at least one iteration of the plurality of iterations. The postprocessing may include concatenating output of the convolutional operation of the plurality of iterations.

According to another aspect, the postprocessing comprises concatenating output of the convolutional operation of the plurality of iterations with output of preprocessing of the input data (for example with the first 1x1 convolution, 1x1 conv (1) like will be described in more detail below).

According to another aspect, the postprocessing comprises a further convolution operation (for example the final 1x1 convolution, 1x1 conv (3), like will be described in more detail below).

According to another aspect, the computer implemented method is applied in a convolutional neural network to provide the output of a convolutional block of the convolutional neural network. According to another aspect, the convolutional neural network is applied in an automotive system (for example for ADAS (advanced driver-assistance systems) or for AD (autonomous driving)).

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

The convolutional block according to various embodiments (in other words: the method which determines the output of the convolutional block, and the related computer system and non-transitory computer readable medium) may provide a small memory footprint, good generalization, and high perceptive field, may improve scalability of the networks which fuse data from different sensors, and may allow to run the networks on small, embedded devices. The deeper the developed network, the bigger the memory savings.

DRAWINGS

Exemplary embodiments and functions of the present disclosure are described herein in conjunction with the following drawings, showing schematically:

Fig. 1     an illustration of a ResBlock as an example of a convolutional block;

Fig. 2     an illustration of a RetinaNet feature pyramid;

Fig. 3     a block diagram of a convolutional block according to various embodiments; and

Fig. 4     a flow diagram illustrating a method according to various embodiments for determining an output of a convolutional block of an artificial neural network based on input data.

DETAILED DESCRIPTION

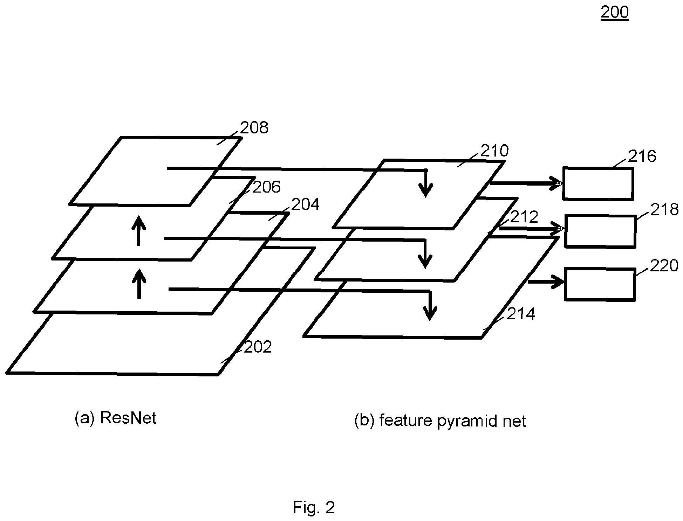

Artificial neural networks (NN) are widely used for various applications, for example as a part of perception systems for ADAS (advanced driver-assistance systems) and autonomous driving (AD). NN architectures may be developed driven by the following goals: increase of the accuracy of the results, decrease of the number of operations to be performed (FLOPS), and decrease of the size of the network. For perception solutions, the network in use may for example be a convolutional neural network (CNN). Commonly used CNNs consist of multiple layers of convolution operations connected. In different networks, the convolution operations are arranged in different architectures (in other words: the way the convolutions are connected and ordered may differ between different CNNs). The architecture of a NN is defined by convolution(al) blocks (set of layers) and their connections. The distinction between a block and a connection is that the block provides a (single) processing step of the network and the connection defines how different blocks are connected (for example in a feature pyramid like will be described with reference to Fig. 2 below).

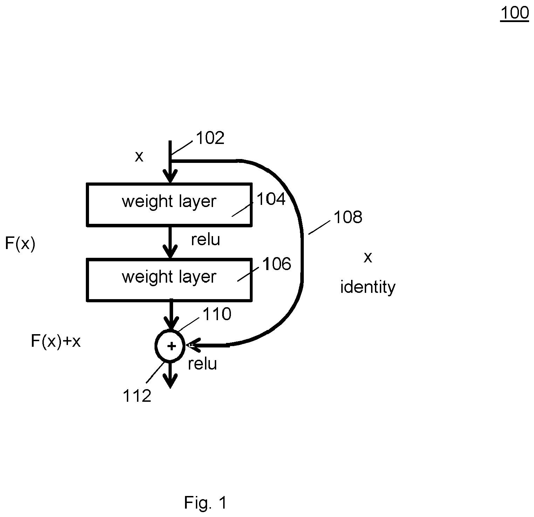

Fig. 1 shows an illustration 100 of a ResBlock as an example of a convolutional block, which may be a part of ResNet, which is a widely used design. Its main advantage is that the input value x 102 is propagated and not changed through the whole block, and the network calculates only "correction" in relation to the input x 102. This makes backpropagation of gradient easier and allows for deeper network (with more layers). Two weight layers (a first weight layer 104 and a second weight layer 106) are provided, and the input value x 102 (without any changes, like indicated by identity 108) may be added (like indicated by addition block 110) to the output of the second weight layer 106, to obtain the output 112 of the ResBlock. relu activations may be provided between the first weight layer 104 and after the addition block 110.

Fig. 2 shows an illustration 200 of a RetinaNet feature pyramid, which is an example of connections design between the convolutional blocks, which is another part of the neural network architecture. Feature pyramid (for example from RetinaNet) are a common large-scale architectural solution of the CNNs. Its idea is to downscale (encode, via various levels 202, 204, 206, 208) and upscale (decode, via various levels 210, 212, 214) the information from input, which may allow for better generalization and improved resolution at the output of network. On each of the upscaled levels 210, 212, 214, respective class subnets and box subnets (216, 218, 220) may be provided.

According to various embodiments, a convolutional block may be provided. The convolutional block is modular, allows for building big and small networks for different applications (for example automotive applications), and may have a relatively small number of operations (which decreases the execution time), and limits the number of its weights.

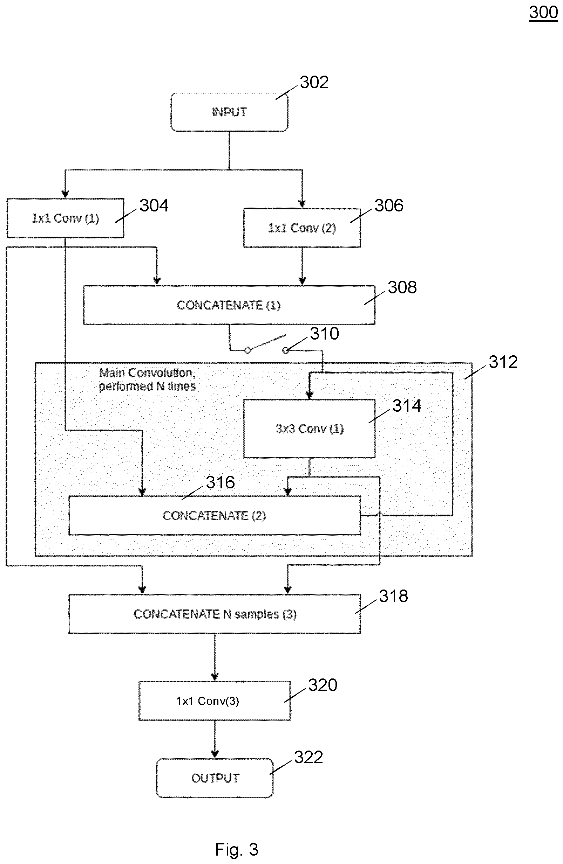

Fig. 3 shows a block diagram 300 of a convolutional block according to various embodiments. An input 302 may be processed by two convolutions, for example 1x1 convolutions, for example a first 1x1 convolution 304 (1x1 Conv (1)) and second 1x1 convolution 306 (1x1 Conv (2)) to set the channel widths, which may be required by the network. Channel width of 1x1 Conv (1) may basically be arbitrary, and for example may be determined empirically with the idea that half of the input of 3x3 convolution will be its own output and half will be processed input of the whole block.

The first 1x1 convolution 304 and the second 1x1 convolution 306 may be concatenated (for example by block 308 labelled concatenate (1)), and this concatenation may be used to set the size equal to a main 3x3 convolution 314 (main 3x3 Conv (1)). A second concatenate block 316 (concatenate (2)) may provide an output with a size equal to the main 3x3 convolution 314.

The output of the first concatenate block 308 may be ingested (or taken as an input) by the same 3x3 convolution 314 as an output of the second concatenate block 316. The output of the first concatenate block 308 may be used only once, to start the main loop. Illustratively, after the first iteration, switch 310 may be opened to provide the output of the second concatenate block 316 (instead of the output of the first concatenate block 308) to the 3x3 convolution 314.

A main loop (like illustrated by box 312) of the convolutional block according to various embodiments may include the 3x3 convolution 314 and the concatenate block 316, which may provide the main convolution, and may be performed N times. In the main loop, a single set of weights may be used multiple times for the 3x3 convolution 314. In each loop, the output of the 3x3 convolution 314 may be passed to the final (or third) concatenation block 318 and to the in-loop (or second) concatenation block 316. The in-loop concatenation block 316 may concatenate the output of the 3x3 convolution 314 with the output of first 1x1 convolution 304. The data which is concatenated by the second concatenation block 316 may then be redirected as an input to the 3x3 convolution block 314 in the next loop iteration (wherein the iteration may include a total of N iterations). The result of all N 3x3 convolution operations (by the 3x3 convolution block 314) may be concatenated together by the a final (or third) concatenation block 318 and passed to a last convolution 320. The output of the last convolution 320 may be the output 322 of the convolutional block according to various embodiments.

It will be understood that reference to an operating block in Fig. 3 may also refer to the result of that operating block (for example, when reference to the first 1x1 convolution 304 is made, it may refer to the block itself, and also may refer to the output of that block).

Each block may provide an output based on an input, and the equations relating the input with the output may be as follows:

$$y_{C1x1(1)} = f_{C1x1(1)}(input)$$

$$y_{C1x1(2)} = f_{C1x1(2)}(input)$$

$$y_{C3x3}^{n} = \begin{cases} f_{C3x3}([y_{C1x1(1)} \quad y_{C1x1(2)}]) & \text{for } n=1 \\ f_{C3x3}([y_{C1x1(1)} \quad y_{C3x3}^{n-1}]) & \text{for } n>1 \end{cases}$$

$$output = f_{C1x1(3)}([y_{C1x1(1)} \quad y_{C3x3}^{1} \quad y_{C3x3}^{2} \quad \cdots \quad y_{C3x3}^{N}])$$

where:

"input" is the input of the whole convolutional block;
"output" is the output of the whole convolutional block;
N is the number of loops (or iterations);
n is a loop (or iteration) step number;
$f_{[name]}$ refers to a convolution operation, where [name] refers to the size and index of the convolution.

Convolution operations may be given by the following equation:

$$z_{ij}^{l} = \sum_{a=0}^{m-1} \sum_{b=0}^{m-1} \omega_{ab} \, y_{(i+b)(j+b)}^{l-1}$$

$$y_{ij}^{l} = \sigma\left(z_{ij}^{l}\right)$$

where

$y^{l}$ is a result of the convolution;
$y^{l-1}$ is a result of the previous convolution;
l is the convolutional layer number;
m is the size of the filter (of the convolution);
ij are indices of the matrix
$\omega$ is the matrix containing the filter weights (of the size [m x m x y'filtersize x $y^{l-1}$filtersize]); and
$\sigma$ is a non-linear activation function (e.g. sigmoid, tanh, ReLU).

With the method according to various embodiments as shown in Fig. 3, the 3x3 Conv (1) 314 may be reused multiple times, and because of that, the block may only have one set of 3x3 convolution weights. This may limit the size of weights substantially (as 3x3 filters are 9 times larger than 1x1, and there is only one 3x3 convolution) without reducing the computational performance of the block. The in-loop concatenation (2) may allow for expanding of the perceptive field of 3x3 Conv (1), which improves its performance and allows for better generalization. The variable size of the main recursion (or iteration) loop may allow adding modularity to the block (the block may be used to produce very deep networks with high N values, and smaller networks with smaller N value). The reuse of the same 3x3 conv (1) 314 may also allow gradient accumulation and therefore faster convergence during training.

An artificial neural network which uses a convolutional block according to various embodiments may be watermarked, so that it may be detected and traced whether the artificial neural network uses the convolutional block according to various embodiments.

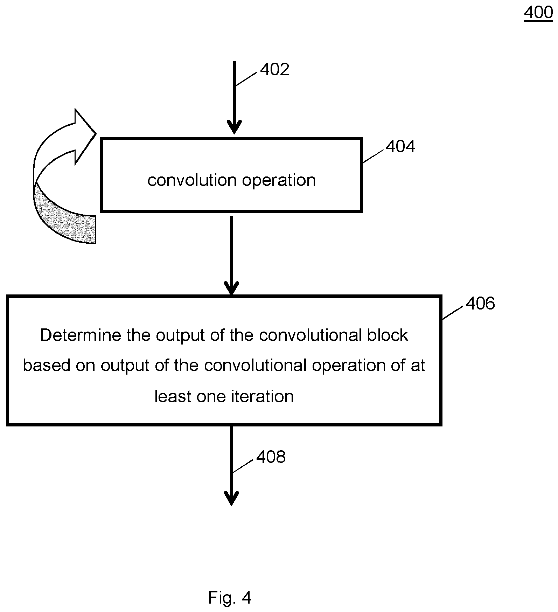

Fig. 4 shows a flow diagram 400 illustrating a method according to various embodiments for determining an output 408 of a convolutional block of an artificial neural network based on input data 402. The method may include performing an iteration with a plurality of iterations 404, wherein in each iteration 404, a convolution operation is performed. In a first iteration, an input to the convolution operation is based on the input data. In subsequent iterations, an input to the convolution operation at a present iteration is based on an output of the convolution operation at a preceding iteration. At 406, the output 408 of the convolutional block may be determined based on output of the convolutional operation of at least one iteration of the plurality of iterations 404.

According to various embodiments, the convolution operation may be based on a plurality of weights, wherein the plurality of weights are identical for each iteration of the plurality of iterations. The convolution operation may include a 3x3 convolution operation. The iteration may include N iterations, wherein N is a pre-determined integer number.

In a first iteration, the input to the convolution operation may be based on preprocessing the input data. The preprocessing may include two further convolution operations. The preprocessing may include concatenation of the respective outputs of the two further convolution operations.

According to various embodiments, the output of the convolution block may be determined based on postprocessing of output of the convolutional operation of at least one iteration of the plurality of iterations. The postprocessing may include concatenating output of the convolutional operation of the plurality of iterations. The postprocessing may include concatenating output of the convolutional operation of the plurality of iterations with output of preprocessing of the input data. The postprocessing may include a further convolution operation.

According to various embodiments, the computer implemented method may be applied in a convolutional neural network to provide the output of a convolutional block of the convolutional neural network. The convolutional neural network may be applied in an automotive system.

Each of the steps 404, 406, and the further steps described above may be performed by computer hardware components.

Reference numeral list

| 100 | illustration of a ResBlock |
|-----|----------------------------|
| 102 | input value |
| 104 | first weight layer |
| 106 | second weight layer |
| 108 | identity |
| 110 | addition block |
| 112 | output |

| 200 | illustration of a RetinaNet feature pyramid |
|-----|---------------------------------------------|
| 202 | downscaling level |
| 204 | downscaling level |
| 206 | downscaling level |
| 208 | downscaling level |
| 210 | upscaling level |
| 212 | upscaling level |
| 214 | upscaling level |
| 216 | class and box subnets |
| 218 | class and box subnets |
| 220 | class and box subnets |

| 300 | block diagram of a convolutional block according to various embodiments |
|-----|-------------------------------------------------------------------------|
| 302 | input |
| 304 | first 1x1 convolution |
| 306 | second 1x1 convolution |
| 308 | concatenation block |
| 310 | switch |
| 312 | box illustrating main loop |
| 314 | 3x3 convolution |
| 316 | in-loop concatenation block |
| 318 | final concatenation block |
| 320 | last convolution |
| 322 | output |

| 400 | flow diagram illustrating a method according to various embodiments |
|-----|---------------------------------------------------------------------|
| 402 | input data |
| 404 | iterations |
| 406 | step of determining the output of the convolutional block |
| 408 | output |

**Claims**

1.  Computer implemented method for determining an output (408) of a convolutional block of an artificial neural network based on input data (402), the method comprising the following steps carried out by computer hardware components:

    performing an iteration with a plurality of iterations (404);
    wherein in each iteration (404), a convolution operation is performed;
    wherein in a first iteration, an input to the convolution operation is based on the input data (402);
    wherein in subsequent iterations, an input to the convolution operation at a present iteration is based on an output of the convolution operation at a preceding iteration; and
    determining (406) the output (408) of the convolutional block based on output of the convolutional operation of at least one iteration of the plurality of iterations (404).

2.  The computer implemented method of claim 1,
    wherein the convolution operation is based on a plurality of weights,
    wherein the plurality of weights are identical for each iteration of the plurality of iterations (404).

3.  The computer implemented method of at least one of claims 1 or 2,
    wherein the convolution operation comprises a 3x3 convolution operation.

4.  The computer implemented method of at least one of claims 1 to 3,
    wherein the iteration comprises N iterations (404), wherein N is a pre-determined integer number.

5.  The computer implemented method of at least one of claims 1 to 4,
    wherein in a first iteration, the input to the convolution operation is based on preprocessing the input data (402).

6.  The computer implemented method of claim 5,
    wherein the preprocessing comprises two further convolution operations.

7.  The computer implemented method of claim 6,
    wherein the preprocessing comprises concatenation of the respective outputs of the two further convolution operations.

8.  The computer implemented method of at least one of claims 1 to 7,
    wherein the output (408) of the convolution block is determined based on postprocessing of output of the convolutional operation of at least one iteration of the plurality of iterations (404).

9.  The computer implemented method of claim 8,
    wherein the postprocessing comprises concatenating output of the convolutional operation of the plurality of iterations (404).

10. The computer implemented method of at least one of claims 8 or 9,
    wherein the postprocessing comprises concatenating output of the convolutional operation of the plurality of iterations (404) with output of preprocessing of the input data (402).

11. The computer implemented method of at least one of claims 8 to 10,
    wherein the postprocessing comprises a further convolution operation.

12. The computer implemented method of at least one of claims 1 to 11,
    wherein the computer implemented method is applied in a convolutional neural network to provide the output of a convolutional block of the convolutional neural network.

13. The computer implemented method of claim 12,
    wherein the convolutional neural network is applied in an automotive system.

14. Computer system, the computer system being configured to carry out the computer implemented method of at least one of claims 1 to 13.

**15.** Non-transitory computer readable medium comprising instructions for carrying out the computer implemented method of at least one of claims 1 to 13.

100

x

102

weight layer 104

F(x)

relu

weight layer 106

108

x

identity

F(x)+x

110

112

relu

Fig. 1

<u>200</u>

(a) ResNet                    (b) feature pyramid net

Fig. 2

300

INPUT — 302

1x1 Conv (1) — 304

1x1 Conv (2) — 306

CONCATENATE (1) — 308

310

Main Convolution, performed N times — 312

3x3 Conv (1) — 314

CONCATENATE (2) — 316

CONCATENATE N samples (3) — 318

1x1 Conv(3) — 320

OUTPUT — 322

Fig. 3

400

402

convolution operation                                   404

Determine the output of the convolutional block
based on output of the convolutional operation of at
least one iteration                                     406

408

Fig. 4

Europäisches
Patentamt

European
Patent Office

Office européen
des brevets

# EUROPEAN SEARCH REPORT

Application Number

EP 20 16 6486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/071370 A1 (INTEL CORP [US]; CAI DONGQI [CN] ET AL.) 18 April 2019 (2019-04-18) * abstract * * paragraph [0023] - paragraph [0026] * * paragraph [0048] * * paragraph [0057] - paragraph [0061] * * figure 9 * | 1-15 | INV. G06N3/04 G06N3/08 |
| X | GB 2 576 784 A (FACESOFT LTD [GB]) 4 March 2020 (2020-03-04) * abstract * * page 7, line 5 - page 11, line 14 * * figure 3 * | 1-15 | |
| X | JIA GUO ET AL: "Stacked Dense U-Nets with Dual Transformers for Robust Face Alignment", ARXIV.ORG, CORNELL UNIVERSITY LIBRARY, 201 OLIN LIBRARY CORNELL UNIVERSITY ITHACA, NY 14853, 5 December 2018 (2018-12-05), XP080989415, * abstract * * section 2 * * figure 3 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 25 September 2020 | Papadakis, Georgios |

EPO FORM 1503 03.82 (P04C01)

## ANNEX TO THE EUROPEAN SEARCH REPORT
## ON EUROPEAN PATENT APPLICATION NO.

EP 20 16 6486

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2020

| Patent document cited in search report | | Publication date | Patent family member(s) | | Publication date |
|---|---|---|---|---|---|
| WO 2019071370 | A1 | 18-04-2019 | US 2020279156 A1<br>WO 2019071370 A1 | | 03-09-2020<br>18-04-2019 |
| GB 2576784 | A | 04-03-2020 | GB 2576784 A<br>WO 2020049276 A1 | | 04-03-2020<br>12-03-2020 |

EPO FORM P0459

For more details about this annex : see Official Journal of the European Patent Office, No. 12/82